Europäisches Patentamt

European Patent Office

Office européen des brevets

(11) Numéro de publication: **0 346 804**
**A1**

## DEMANDE DE BREVET EUROPEEN

(21) Numéro de dépôt: **89110610.6**

(51) Int. Cl.⁴: **G06F 11/18**

(22) Date de dépôt: **12.06.89**

(30) Priorité: **14.06.88 FR 8807917**

(43) Date de publication de la demande:
**20.12.89 Bulletin 89/51**

(84) Etats contractants désignés:
**AT BE CH DE ES FR GB GR IT LI LU NL SE**

(71) Demandeur: **ALSTHOM**
**38, avenue Kléber**
**F-75784 Paris Cédex 16(FR)**

(72) Inventeur: **Fontaine, Alain**
**8 rue Fabre d'Eglantine**
**F-75012 Paris(FR)**
Inventeur: **Gabillet, Jean-François**
**44 rue de l'Orée des Bois**
**F-60580 Coye la Foret(FR)**
Inventeur: **Garelli, Philippe**
**21 rue Gutenberg**
**F-92100 Boulogne(FR)**

(74) Mandataire: **Weinmiller, Jürgen et al**
**Lennéstrasse 9 Postfach 24**
**D-8133 Feldafing(DE)**

(54) **Dispositif de traitement de données et de commande.**

(57) L'invention concerne un dispositif de traitement de données et de commande.

Elle a pour objet un dispositif informatique de traitement de données et de commande pour une installation industrielle, comprenant un premier niveau "zéro" d'aide à l'exploitation de ladite installation et un niveau 3 constitué de capteurs d'information et d'actionneurs, caractérisé en ce qu' il comprend, entre le niveau "zéro" et le niveau 3, un niveau 1 centralisé de calcul et de décision et un niveau 2 constitué de calculateurs géographiquement répartis dans des zones d'étendue réduite, le niveau 1 comportant trois calculateurs ((11A, 11B, 11C) exécutant en parallèle les mêmes programmes (à des éventuelles différences de configuration près) et envoyant les résultats sous forme de trois messages aux modules de calcul (20A, 20B, 20C) du niveau 2, chaque module du niveau 2 utilisant les principes du processeur codé et agissant comme un voteur 2 parmi 3 vis-à-vis des messages reçu du niveau 1, et effectuant des calculs de commande des organes (31A, 32A...) du niveau 3 sous le contrôle du niveau 1, les niveaux 0 et 1, et 1 et 2 étant reliés par des réseaux locaux (2, 4).

Application notamment à la commande d'un poste d'aiguillage.

FIG.1

## Dispositif de traitement de données et de commande

La présente invention est relative à un dispositif de traitement de données et de commande (type automate de sécurité), appliquable notamment à la commande d'un poste d'aiguillage.

Un objectif primordial de sécurité de fonctionnement est en effet recherché pour la commande des postes d'aiguillage ; toutes les informations envoyées aux actionneurs doivent être sûres pour éviter des fausses manoeuvres qui pourraient entraîner des accidents sévères.

Il a été proposé d'utiliser un calculateur unique, du type à sécurité assurée par codage (selon la technique du "monoprocesseur codé").

Ce type de calculateur nécessite un temps de traitement trop long pour être utilisé pour traiter la totalité des informations d'un poste d'aiguillage de taille moyenne dans un délai compatible avec la chronologie des événements du réseau ferroviaire.

Il a été proposé d'assurer la sécurité en utilisant deux calculateurs identiques recevant chacun les mêmes données et de n'accepter pour bonne une information fournie par un calculateur que si elle est identique à l'information fournie simultanément par l'autre calculateur, et ce, au moyen d'un dispositif de vote appelé "voteur". Les pannes éventuelles au niveau des deux calculateurs sont détectées par les techniques d'usage en pareil cas, utilisant notamment des algorithmes d'autotests. L'ensemble de cette technique est dénommé "redondance spatiale".

La présente invention consiste à conjuguer quatre principes :
- décentralisation de certains calculateurs du système, afin de d'adapter à des configurations physiques variées (configurations d'un poste d'aiguillage en particulier) ;
- utilisation d'une technique de sécurité mixte basée sur une redondance spatiale au niveau centralisé, et sur la technique du "processeur codé" au niveau décentralisé ;
- utilisation de la technique du "processeur codé" pour effectuer de manière décentralisée le vote relatif à la redondance spatiale ;
- protection des informations transitant entre les différents calculateurs par codage.

Le premier de ces principes est largement appliqué dans toutes sortes de systèmes.

On pourra, à cet égard, se référer au document EP-A-005 968 et à l'article SIGNAL & DRAHT vol. 78 n° 9, septembre 1986, pages 175-184.

Les deuxième et troisième principes sont nouveaux et constituent l'originalité de la présente invention. Le quatrième de ces principes découle naturellement des précédents.

Un but de la présente invention est de réaliser un dispositif de traitement et commande modulaire, donc adaptable à toutes les configurations industrielles existantes, et à toutes leurs extensions.

Un autre but de l'invention est de réaliser un dispositif de traitement et commande assurant des informations totalement sûres, avec des temps de réponses compatibles avec des exigences élevées d'exploitation.

Conformément à l'invention, le dispositif de commande comporte, entre un niveau "zéro" d'aide à l' exploitation du système (interface avec l'exploitant), et un niveau 3 constitué des capteurs d'information et des actionneurs ;
- un niveau 1 centralisé de calcul et de décision ;
- un niveau 2, constitué de modules de calcul et de gestion d'entrées/sorties, géographiquement répartis et couvrant chacun des zones d'étendue réduite.

Le niveau 1 comporte trois calculateurs exécutant en parallèle des programmes identiques et envoyant les résultats sous forme de trois messages codés aux modules de calcul du niveau 2, chaque module du niveau 2 utilisant les principes du processeur codé et agissant comme voteur 2 parmi 3 vis-à-vis des messages reçus du niveau 1, et effectuant des calculs pour la commande des organes du niveau 3 sous le contrôle du niveau 1.

Les niveaux 0 et 1, et 1 et 2 sont reliés par des réseaux locaux.

L'invention sera précisée sur un exemple d'application à la réalisation d'un poste d'aiguillage, cet exemple étant donné à titre illustratif et nullement limitatif.

La figure 1 est un schéma synoptique d'un dispositif de commande d'un poste d'aiguillage selon l'invention.

La figure 2 est un schéma illustrant un cycle de fonctionnement.

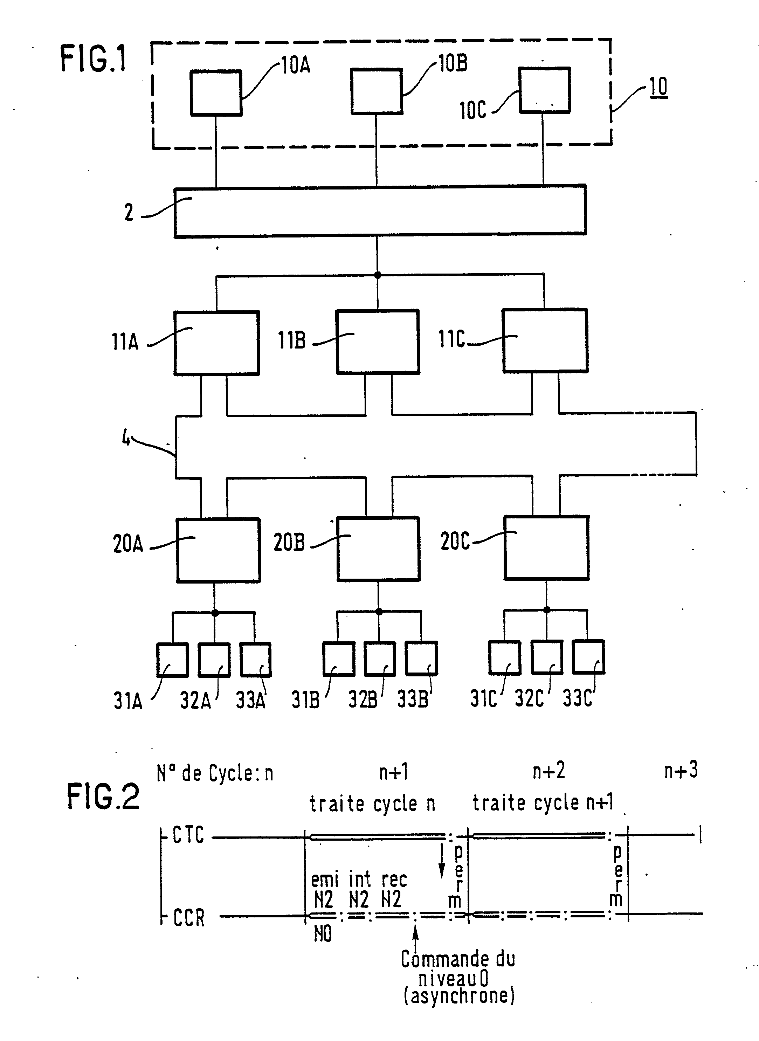

Dans la figure 1, le bloc référencé 10 désigne un ensemble de modules 10A, 10B, 10C, dits de niveau zéro, de type connu, et servant d'aide à l'exploitation et comprenant dans l'exemple décrit, la programmation et la commande automatique des itinéraires, le suivi des trains, le téléaffichage etc...

Ces modules de niveau 0 dialoguent à l'aide d'un réseau local de communication avec un niveau "1" de calcul (niveau dit enclenchements) comprenant trois calculateurs 11A, 11B, et 11C identiques et effectuant simultanément les mêmes calculs au moyen de programmes identiques.

Cette redondance avec trois calculateurs assure à la fois la disponibilité et la sûreté de fonctionnement du système (le principe de l'invention peut naturellement être appliqué avec seulement deux calculateurs, remplissant alors uniquement la fonction de sûreté du système, l'ensemble constitué de ces deux calculateurs pouvant éventuellement être doublé). On confie à ces calculateurs ou "modules" les tâches générales telles que surveillance et commande de l'espacement des trains, fonctionnement des protections, annonce des passages à niveau, etc...

Le dispositif comporte enfin un niveau 2 de calcul (niveau terrain) comprenant des modules de calcul (dit "contrôleurs d'objets") tels que 20A, 20B, 20C gérant chacun une zone d'étendue réduite et délocalisés, à proximité des équipements à gérer (dits "objets" : capteurs, actionneurs...), figurés par les carrés 31A, 32A, 33A, 31B, 32B, 33B, 31C, 32C, 33C (niveau 3).

Ces derniers équipements sont par exemple les organes de détection des trains, les organes de commande et de contrôle des aiguilles, la commande et la surveillance de l'état des passages à niveaux, etc...

Le niveau 2 de calcul est relié au niveau 1 par un réseau local 4.

Le niveau 2 du calcul est relié au niveau 3 par des liaisons d'entrée-sortie 5, classiques.

Selon une caractéristique de l'invention, chaque module de niveau 2 reçoit les trois messages des calculateurs de niveau 1 dans un intervalle de temps donné, et ne les considère comme valable que si deux au moins sont identiques.

Par ailleurs, chaque module de niveau 2 est un calculateur réalisé suivant la technique du processeur codé et recevant des messages compactés et codés selon les techniques du monoprocesseur codé.

Ce codage et ce compactage sont effectués fonctionnellement par chacun des calculateurs de niveau 1. (On rappelle que la technique du monoprocesseur codé comporte à l'émission un compactage entre des variables et une variable compactée et une opération inverse à la réception).

Le réseau de communication utilisé entre les niveaux 1 et 2 est de préférence un réseau connu sous la marque déposée TORNAD.

Le déroulement d'un cycle de fonctionnement du système peut être schématiquement résumé comme suit, en référence à la figure 2.

- Emission et commande :

- Au début du cycle, chacun des calculateurs du niveau 1 émet les commandes vers le niveau 2. Ces commandes sont issues des calculs d'enclenchements réalisés au cycle précédent. L'émission est effectuée contrôleur d'objet par contrôleur d'objet sous la forme de messages codés et compactés (ce codage et ce compactage sont effectués fonctionnellement suivant la technique monoprocesseur codé).

Au niveau 2, ces messages arrivent aux contrôleurs d'objets trois par trois dans un intervalle de temps donné. C'est le rôle de chaque contrôleur d'objet d'effectuer un vote majoritaire 2 parmi 3 et de considérer que le fonctionnement est correct si deux au moins des messages sont reçus à l'identique dans un temps donné (les messages sont datés, la date étant croissante d'un cycle sur l'autre).

Les contrôleurs d'objets du niveau 2 commandent les objets (niveau 3) sur la base du message reçu et des fonctions spécifiques à chaque objet (ex dans le cas d'un poste d'aiguillage : fonctions de report de feux).

- Interrogation et réponse :

Après la phase d'émission, le N1 passe à la phase d'interrogation des contrôleurs d'objets par envoi de messages d'interrogation.

Dans le cas de l'application du poste d'aiguillage, seul un calculateur de niveau 1 parmi les trois, dit "calculateur principal" émet les messages d'interrogation. Les contrôleurs d'objets reçoivent donc un seul message d'interrogation. Ils répondent individuellement vers chacun des trois calculateurs N1. Les éventuels problèmes d'erreurs réseaux et de répétitions d'interrogations sont traités individuellement par chaque calculateur de niveau 1.

Au niveau 2, les contrôleurs d'objets émettent en retour les états des objets collectés en permanence sur la base d'un cycle local au niveau- 2. Les messages sont codés et compactés selon la technique du monocompresseur codé.

- Réception et traitement central :

Vient ensuite la phase de réception au cours de laquelle chaque calculateur de niveau 1 décompacte et décode les messages du niveau 2, et est rafraîchi avec les états des objets du niveau 2.

Les commandes du niveau 0 sont reçues par chacun des calculateurs de niveau 1 de manière asynchrone dans le cycle.

- Synchronisation/permutation :

Les calculateurs de niveau 1 sont synchronisés entre eux au niveau de chaque cycle.

L'invention pourra s'appliquer toutes les fois qu'un haut degré de sécurité, associé à une vitesse d'exécution suffisante et à une grande souplesse d'adaptation est exigé d'un système de commande.

**Revendications**

Dispositif informatique de traitement de données et de commande pour une installation industrielle, comprenant un premier niveau "zéro" d'aide à l'exploitation de ladite installation et un niveau 3 constitué de capteurs d'information et d'actionneurs, caractérisé en ce qu'il comprend, entre le niveau "zéro" et le niveau 3, un niveau 1 centralisé de calcul et de décision et un niveau 2 constitué de calculateurs géographiquement répartis dans des zones d'étendue réduite, le niveau 1 comportant trois calculateurs ((11A, 11B, 11C) exécutant en parallèle les mêmes programmes (à des éventuelles différences de configuration près) et envoyant les résultats sous forme de trois messages aux modules de calcul (20A, 20B, 20C) du niveau 2, chaque module du niveau 2 utilisant les principes du processeur codé et agissant comme un voteur 2 parmi 3 vis-à-vis des messages reçu du niveau 1, et effectuant des calculs de commande des organes (31A, 32A...) du niveau 3 sous le contrôle du niveau 1, les niveaux 0 et 1, et 1 et 2 étant reliés par des réseaux locaux (2, 4).

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 005 968 (WESTINGHOUSE BRAKE AND SIGNAL CO. LTD)<br>* Résumé; page 2, lignes 1-27; figures 1,3; revendications 1,2,4,5,7 *<br>--- | 1 | G 06 F 11/18 |
| D,Y | SIGNAL & DRAHT, vol. 78, no. 9, septembre 1986, pages 175-184, Darmstadt, DE; L. WEHNER: "Das elektronische Stellwerk der Bauform EI A"<br>* Figures 1,6; page 180, colonne 2, ligne 4 - page 181, colonne 2, ligne 6 *<br>--- | 1 | |
| A | PATENT ABSTRACTS OF JAPAN, vol. 9, no. 262 (P-398)[1985], 19 octobre 1985, page 18 P 398; & JP-A-60 110 073 (HITACHI SEISAKUSHO K.K.) 15-06-1985<br>--- | 1 | |
| A | ELEKTROTECHNIK, vol. 69, no. 12, août 1987, pages 16-18,23,26-27, Würzburg, DE; M. RUDOLF: "Störungen im Griff"<br>* Figure 2 *<br>----- | 1 | |

**DOMAINES TECHNIQUES RECHERCHES (Int. Cl.4)**

```
G 06 F   11/18
G 05 B    9/02
G 05 B   19/04
G 05 B   19/41
B 61 L   21/00
B 61 L    1/20
B 61 L   21/06
B 61 L   19/06
G 05 D    1/00
```

Le présent rapport a été établi pour toutes les revendications

| Lieu de la recherche | Date d'achèvement de la recherche | Examinateur |
|---|---|---|
| LA HAYE | 04-08-1989 | ALONSO Y GOICOLEA L. |